# EUROPEAN PATENT SPECIFICATION

(11) **EP 1 592 596 B1**
(45) Date of publication and mention of the grant of the patent: **14.02.2007**
(21) Application number: 04705209.7
(22) Date of filing: 26.01.2004
(51) Int. Cl.: B62B 3/065

(54) **FORK LIFT CARRIAGE**
GABELSTAPLERWAGEN
CHARIOT ELEVATEUR A FOURCHE

(30) Priority: 27.01.2003 SE 0300190
(43) Date of publication of application: 09.11.2005
(73) Proprietor: Johansson, Roland, 565 33 Mullsjö (SE)
(72) Inventor: Johansson, Roland, 565 33 Mullsjö (SE)
(74) Representative: Lundquist, Arne
(86) International application number: PCT/SE2004/000106
(87) International publication number: WO 2004/067351

(56) References cited:
- SE-C2- 515 041
- US-A- 3 700 060
- US-A- 4 061 200
- US-A- 4 925 199

## Description

The present invention relates to a fork lift carriage, comprising a stand whereat preferably two wheels are journalled and which carries a lifting cylinder wherein a piston is provided to lift, when subject to pressure, a lifting element, preferably in the form of two parallel substantially horizontal forks, a limited vertical path, whereas a first pump cylinder for hydraulic liquid is connected to the lifting cylinder, arranged to pressurize, acted upon by a manually handled lever, the lifting cylinder.

Such fork lift carriages have found a widespread usage, as shown in Figure 4 of US-A-4,925,199, especially for handling loading pallets, i e for transferring such ones at substantially horizontal floors, especially in warehouses. The manual handling means, that the operator must perform a number of movements with the lever, i e a handspike, every time a loading pallet is to be lifted. During a working day the operator thus will be subject to a great number of loads, meaning an obvious risk for wear injury, especially if the operator works full time with the fork lift carriage, for example at a warehouse.

Thus there is a great demand for improvements at fork lift carriages of the type mentioned introductorily, hitherto available, so that the risk for working injuries decreases.

According to the invention a fork lift carriage of the type mentioned introductorily is characterized in that a pump, preferably a second pump cylinder is arranged, acted upon by the wheel mentioned above, when rotating, to bring a cylinder to store energy in a spring means , whereas that cylinder is connected to the lifting cylinder via a pipe with a valve, such that when this is opened, the spring means brings the cylinder to lift the lifting element via the lifting cylinder.

By this construction of a fork lift carriage the wearing work to pump up the load manually is eliminated. The extra work when pulling the fork lift carriage over the substrate, that is required to store the energy needed for lifting the load is much less wearing than the manual pumping work previously needed.

Different constructions are possible for transferring the movement of the wheel to the pump. The pump may of several types, preferably a second pump cylinder, but screw pumps, gear wheels etc are possible. In one embodiment a second pump cylinder is provided to be acted upon by the rotation of the wheel via a link, journalled at one end at the rim of the wheel and at the other end of the piston of the pump cylinder. Hereby one pump stroke is achieved for each wheel revolution. In order to obtain, in an easy way, several pump strokes for each wheel revolution, the pump, preferably the second pump cylinder may be arranged to be acted upon by the rotation of the wheel via a running wheel, journalled at the piston, arranged to follow a wave path provided at the side of the wheel, the section of which wave path being formed preferably as a sine curve with a wavelength λ less than the extension of the wave path one revolution of the wheel. By this design, two or several pump strokes may be obtained for each wheel revolution. The spring means may be of different arts, such as mechanical of different designs. It has proved to be especially advantageous to design it in the form of a gas spring, that is to say a piston/cylinder element, where the piston pressurizes a gas when pushed in, In one especially advantageous embodiment of the invention the cylinder and the gas spring have one piston in common. The cylinder and the spring means may be arranged at different places of the fork lift carriage, but one suitable place is under one fork. In one embodiment the fork lift carriage is provided with one set cylinder / spring means under each fork. When operating the fork lift carriage it may occur, that this is transported relatively long ways. In order to avoid, that the wheel is unnecessarily retarded by the resistance of the spring means, after the same has been pressurized to maximal energy storing, it is suitable to provide a shunt pipe in the form of a pipe, provided with a relief valve, from the second pump to the lifting cylinder.

The invention shall now be described more in detail, reference being made to the enclosed figures, whereof
figure 1 shows, partly schematically, a side view of a fork lift carriage according to the invention in one first embodiment,
figure 2 shows the object of figure 1 in a plane view,
figure 3 shows a view of a section of a wheel with details according to the invention, and
figure 4 shows a circuit diagram for the hydraulic system of a fork lift carriage according to the invention.

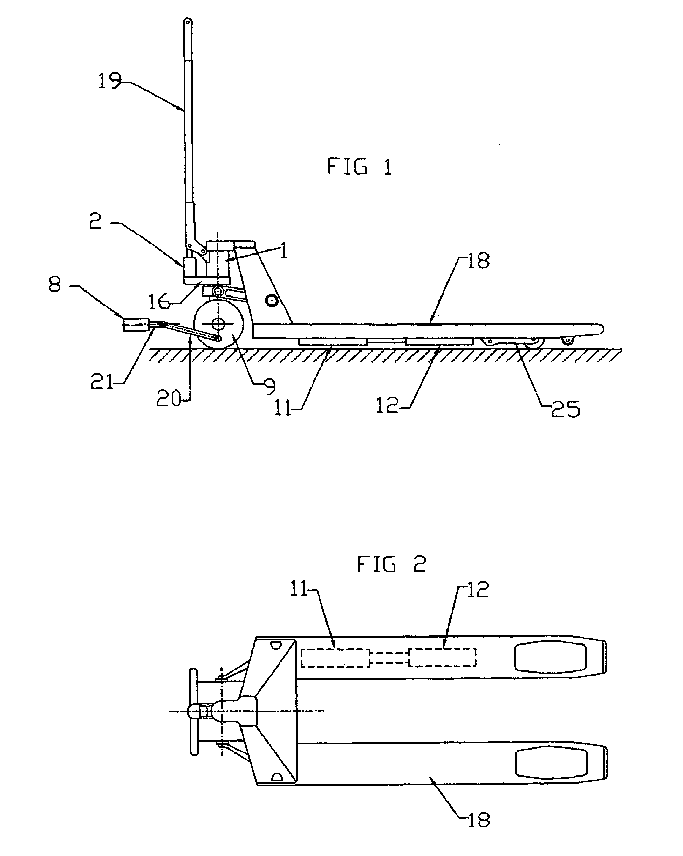

In figure 1 a stand is marked by 16, at which two wheels 9 are journalled and which carries a lifting cylinder 1, provided to be pressurized by a first pump cylinder 2 for hydraulic liquid, whereby it lifts a lifting element comprising two parallel forks 18. A lever element 19 is provided to manually act upon the pump cylinder 2. The lifting element is at its free end provided with supporting wheels 25, which via link systems, not shown, admit the lifting system to be lifted maintaining the horizontal direction of the forks. The lifting height is about one decimetre. In the figure there is only schematically shown how a second pump cylinder 8 with a piston 21 via a link 20 is caused to perform one pump stroke per revolution of the wheel 9, whereby the pump cylinder 8 conveys hydraulic liquid to a cylinder 11, placed under one of the forks 18, which cylinder thereby strains a gas spring 12, which thus stores energy.

Figure 2 shows the fork lift carriage in figure 1 from above.

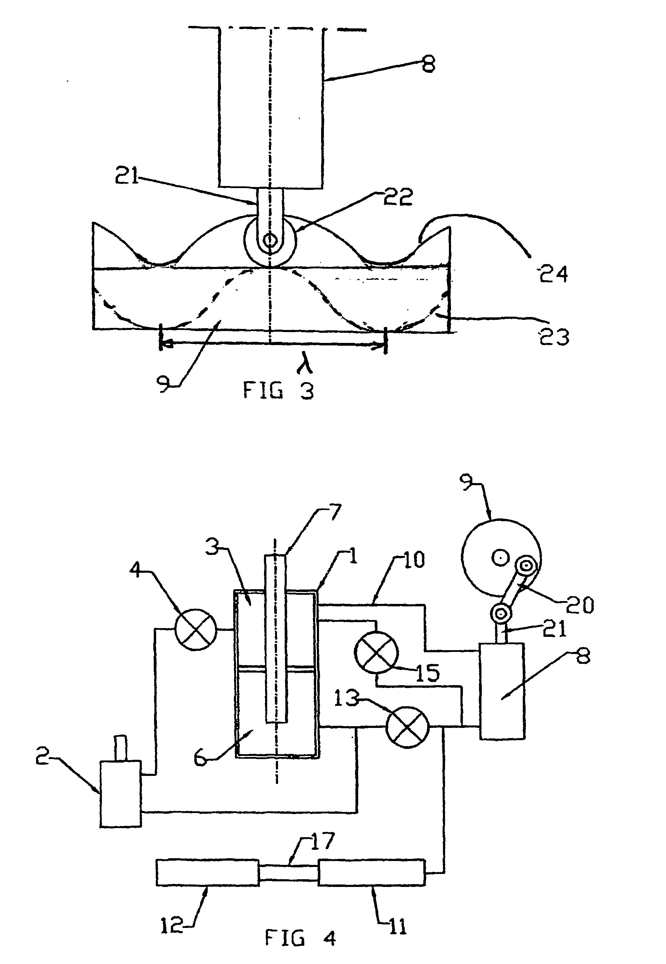

In figure 3 there is shown another embodiment of the design for transferring the rotation movement of the wheel to the second pump cylinder 8. Here a running wheel 22 is journalled at the end of the piston 21 of the second pump cylinder. It runs in a wave path, provided at the side of the wheel 9. The wave path has a bottom 23 and an upper limit 24, fastened at the side of the wheel, at one of its edges, such that the running wheel 22 may be put in below the upper limit from the side. The section of the wave path is in this case sine formed and has in the embodiment shown the wave length λ =1/4 of the circumference of the wave path, which means, that the second pump cylinder performs 4 pump strokes per wheel revolution.

In figure 4 the hydraulic circuit diagram is shown. Here is shown, how the first pump cylinder 2 takes hydraulic liquid from the storage 3, in connection with the atmosphere, of the lifting cylinder 1. At the pipe between 2 and 3 there is a return valve 4. The pump cylinder 2 presses hydraulic liquid through a pipe 5 to the overpressure chamber 6, so that the piston 7 lifts the load. This description is valid if the fork lift carriage is used the usual way, without the device according to the invention. According to this, there is now a pump, in this embodiment a second pump cylinder 8, which via a feeding pipe 10 takes hydraulic liquid from the storage 3 and presses it to the cylinder 11, which in turn strains the gas spring 12. A valve 13 at the pipe to the overpressure chamber 6 is then closed. When it is desired to lift the load, the valve 13 is opened, whereby hydraulic liquid is pressed from the cylinder 11 to the overpressure chamber 6 in the lifting cylinder 1, whereby its piston 7 lifts the lifting element with the load. A pipe 14 is provided from the second pump cylinder 8 to the storage 3 in the lifting cylinder 1. This pipe 14 comprises a pressure relief valve 15, which opens at a pressure, set in advance, so that the hydraulic liquid is circulated when the gas spring is strained to maximal pressure.

## Claims

1. Fork lift carriage, comprising a stand (16) whereat, preferably two, wheels (9) are journalled and which carries a lifting cylinder(1) wherein a piston (7) is provided to lift, when subject to pressure, a lifting element, preferably in the form of two parallel substantially horizontal forks (18), a limited vertical path, whereas a first pump cylinder (2) for hydraulic liquid is connected to the lifting cylinder (1), arranged to pressurize, acted upon by a manually handled lever (19), the lifting cylinder (1),
**characterized in**
**that** a pump, preferably a second pump cylinder (8), is arranged, acted upon by the wheel (9) mentioned above, when rotating, to bring a cylinder (11) to store energy in a spring means (12), whereas that cylinder (11) is connected to the lifting cylinder (1) via a pipe with a valve (13) such that when this is opened, the spring means (12) brings the cylinder (11) to lift the lifting element via the lifting cylinder (1).

2. Fork lift carriage according to claim 1,
**characterized in**
**that** the pump, in the form of a second pump cylinder (8) is arranged to be acted upon by the rotation of the wheel (9) via a link (20), journalled at one end in the rim of the wheel (9) and at the other end of a piston (21) of the second pump cylinder (8).

3. Fork lift carriage according to claim 1,
**characterized in**
**that** the pump, in the form of a second pump cylinder (8) is arranged to be acted upon by the rotation of the wheel (9) via a running wheel (22), journalled at a piston (21), arranged to follow a wave path (23,24) provided at the side of the wheel (9), the section of which wave path is formed preferably as a sine curve with a wavelength λ less than the extension of the wave path one revolution of the wheel.

4. Fork lift carriage according to any of claims 1 to 3,
**characterized in**
**that** the spring means (12) is a gas spring.

5. Fork lift carriage according to claim 4,
**characterized in**
**that** the cylinder (11) and the gas spring (12) have a piston (17) in common.

6. Fork lift carriage according to any of claims 1 to 5,
**characterized in**
**that** the cylinder (11) and the spring means (12) are arranged under one fork (18).

7. Fork lift carriage according to any of claims 1 to 6, whereas the pump comprises a second pump cylinder (8),
**characterized in**
**that** a pipe (14), provided with a pressure relief valve (15), is provided from the second pump cylinder (8) to the lifting cylinder (1).

## Patentansprüche

1. Gabelstaplerwagen mit einem Gestell (16), an dem vorzugsweise zwei Räder (9) gelagert sind und das einen Hubzylinder (1) trägt, wobei ein Kolben (7) vorgesehen ist, um, wenn er einem Druck ausgesetzt ist, ein Hubelement, vorzugsweise in Form von zwei parallelen, im Wesentlichen horizontalen Gabeln (18), um einen begrenzten vertikalen Weg anzuheben, wobei ein erster Pumpzylinder (2) für eine Hydraulikflüssigkeit mit dem Hubzylinder (1) verbunden und so angeordnet ist, dass er bei Einwirkung mittels eines manuell betätigten Hebels (19) den Hubzylinder (1) unter Druck setzt,
**dadurch gekennzeichnet, dass** eine Pumpe, vorzugsweise ein zweiter Pumpzylinder (8), angeordnet ist, auf die das oben genannte Rad (9) einwirkt, wenn es sich dreht, um zu bewirken, dass ein Zylinder (11) Energie in einer Federeinrichtung (12) speichert, wobei der Zylinder (11) mit dem Hubzylinder (1) über eine Rohrleitung mit einem Ventil (13) so verbunden ist, dass wenn dieses geöffnet ist, die Federeinrichtung (12) bewirkt, dass der Zylinder (11) das Hubelement über den Hubzylinder (1) anhebt.

2. Gabelstaplerwagen nach Anspruch 1,
**dadurch gekennzeichnet, dass** die in Form eines zweiten Pumpzylinders (8) ausgebildete Pumpe so angeordnet ist, dass auf sie die Drehung des Rades (9) über eine Verbindung (20) einwirkt, die mit einem Ende an einem Rand des Rades (9) und mit dem anderen Ende an einem Kolben (21) des zweiten Pumpzylinders (8) gelagert ist.

3. Gabelstaplerwagen nach Anspruch 1,
**dadurch gekennzeichnet, dass** die in Form eines zweiten Pumpzylinders (8) ausgebildete Pumpe so angeordnet ist, dass auf sie die Drehung des Rades (9) über ein laufendes Rad (22) einwirkt, das an einem Kolben (21) gelagert und so angeordnet ist, dass es einem Wellenweg (23, 24) folgt, der an der Seite des Rades (9) vorgesehen ist und dessen Profil vorzugsweise in Form einer Sinuskurve mit einer Wellenlänge λ gebildet ist, die kürzer ist, als die Ausdehnung des Wellenweges entlang einer Umdrehung des Rades.

4. Gabelstaplerwagen nach einem der Ansprüche 1 bis 3,
**dadurch gekennzeichnet, dass** die Federeinrichtung (12) eine Gasfeder ist.

5. Gabelstaplerwagen nach Anspruch 4,
**dadurch gekennzeichnet, dass** der Zylinder (11) und die Gasfeder (12) einen gemeinsamen Kolben (17) aufweisen.

6. Gabelstaplerwagen nach einem der Ansprüche 1 bis 5,
**dadurch gekennzeichnet, dass** der Zylinder (11) und die Federeinrichtung (12) unter einer Gabel (18) angeordnet sind.

7. Gabelstaplerwagen nach einem der Ansprüche 1 bis 6, bei dem die Pumpe einen zweiten Pumpzylinder (8) aufweist,
**dadurch gekennzeichnet, dass** eine mit einem Überdruckventil (15) versehene Rohrleitung (14) von dem zweiten Pumpzylinder (8) zu dem Hubzylinder (1) geführt ist.

## Revendications

1. Chariot de levage à fourche, comportant un socle (16) au niveau duquel de préférence deux roues (9) sont tourillonnées et qui supporte un vérin de levage (1) dans lequel un piston (7) est agencé pour lever, lorsqu'il est soumis à une pression, un élément de levage, de préférence sous la forme de deux fourches horizontales sensiblement parallèles (18), sur un trajet vertical limité, alors qu'un premier cylindre de pompage de liquide hydraulique est relié au vérin de levage (1), agencé pour mettre sous pression, en étant actionné en action par un levier manipulé manuellement (19), le vérin de levage (1),
**caractérisé en ce que**
une pompe, de préférence un second cylindre de pompage (8), est agencée, actionnée par la roue (9) mentionnée ci-dessus, lorsqu'elle est mise en rotation, pour amener un vérin (11) à stocker de l'énergie dans des moyens élastiques (12), alors que ce vérin (11) est relié au vérin de levage (1) via un tuyau ayant une vanne (13) de sorte que lorsque celle-ci est ouverte, les moyens élastiques (12) amènent le vérin (11) à lever l'élément de levage via le vérin de levage (1).

2. Chariot de levage à fourche selon la revendication 1,
**caractérisé en ce que**
la pompe, sous la forme d'un second cylindre de pompage (8), est agencée pour être actionnée par la rotation de la roue (9) via une bielle (20) tourillonnée à une première extrémité dans la jante de la roue (9) et à l'autre extrémité à un piston (21) du second cylindre de pompage (8).

3. Chariot de levage à fourche selon la revendication 1,
**caractérisé en ce que**
la pompe, sous la forme d'un second cylindre de pompage (8), est agencée pour être actionnée par la rotation de la roue (9) via une roue de roulement (22) tourillonnée au niveau d'un piston (21) agencée pour suivre un trajet ondulé (23, 24) agencé au niveau du côté de la roue (9), le tronçon de trajet ondulé étant formé de préférence sous la forme d'une courbe sinusoïdale ayant une longueur d'onde λ plus petite que l'étendue du trajet ondulé sur un tour de roue.

4. Chariot de levage à fourche selon l'une quelconque des revendications 1 à 3,
**caractérisé en ce que**
les moyens élastiques (12) sont un ressort pneumatique.

5. Chariot de levage à fourche selon la revendication 4,
**caractérisé en ce que**
le vérin (11) et le ressort pneumatique (12) ont un piston (17) en commun.

6. Chariot de levage à fourche selon l'une quelconque des revendications 1 à 5,
**caractérisé en ce que**
le vérin (11) et les moyens élastiques (12) sont agencés en dessous d'une fourche (18).

7. Chariot de levage à fourche selon l'une quelconque des revendications 1 à 6, alors que la pompe est constituée d'un second cylindre de pompage (8),
est **caractérisé en ce que**
un tuyau (14), muni d'une soupape de sécurité (15), est agencé depuis le second cylindre de pompage (8) jusqu'au vérin de levage (1).
